# EUROPEAN PATENT SPECIFICATION

(11) **EP 4 486 623 B1**
(45) Date of publication and mention of the grant of the patent: **31.12.2025**
(21) Application number: 22782957.9
(22) Date of filing: 28.02.2022
(51) Int. Cl.: B61B 13/08, B61B 13/10, E01B 25/30, E01D 18/00, E01D 19/00, E01D 21/06, F16L 1/024

(54) **METHOD FOR ERECTING A TRANSPORTATION STRUCTURE**
VERFAHREN ZUM ERRICHTEN EINER TRANSPORTSTRUKTUR
PROCÉDÉ POUR ÉRIGER UNE STRUCTURE DE TRANSPORT

(43) Date of publication of application: 08.01.2025
(73) Proprietor: ArcelorMittal, 1160 Luxembourg (LU)
(72) Inventor: SELLITTO, Giuseppe, 4000 Liège (BE); GREMLING, Michaël, 4100 Seraing (BE); DI SILVESTRO, Elena, 4140 Sprimont (BE)
(74) Representative: Lavoix
(86) International application number: PCT/IB2022/051729
(87) International publication number: WO 2023/161683

(56) References cited:
- WO-A1-2018/196928
- CN-A- 108 755 294
- US-A1- 2008 301 889
- US-A1- 2016 229 419

## Description

The present invention relates to a method for erecting a transportation structure comprising two assemblies of tube segments, each assembly being capable of being placed under low air pressure and through which pods may travel substantially free of air friction. This transportation system is often referred to as the hyperloop technology. The present invention also relates to the corresponding transportation structure.

Hyperloop technology is a proposed high-speed transportation system for both passenger and freight transport. It is basically a sealed system of tubes with low air pressure through which a pod may travel substantially free of air resistance or air friction. It has three major components: a tube, a pod and stations. The tube is a large sealed, low-pressure system that can be constructed above, below or on the ground. It contains the necessary infrastructure to ensure levitation/suspension, propulsion, braking... A vehicle runs inside this controlled environment and is often referred to as a pod. The pod employs electric levitation (either electro-magnetic or electro-dynamic) or aerodynamic levitation (using air-bearing skis) along with electromagnetic or aerodynamic propulsion to glide along a fixed guideway. A station is a facility where a pod can start or stop and where boarding/unboarding of passengers and loading/unloading of cargo are possible. A station is positioned at each extremity of the sealed system of tubes.

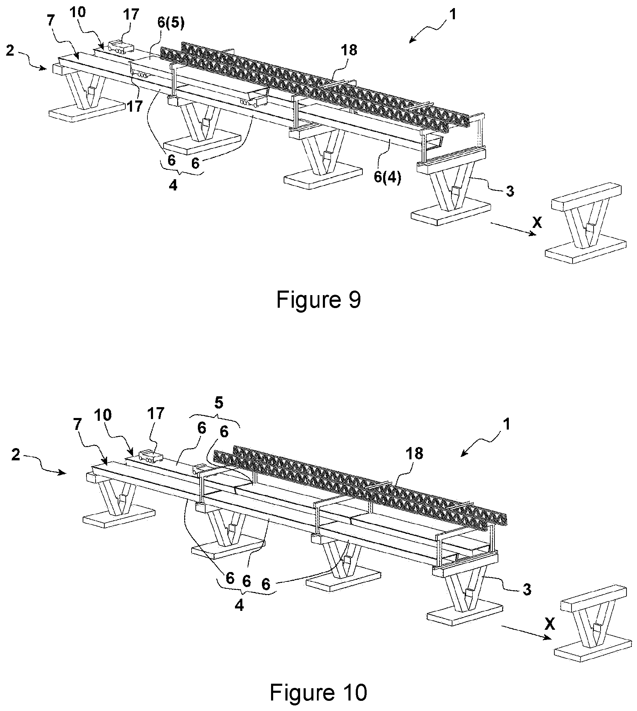

In the artists' views, such as in CN108755294, an above-ground hyperloop structure is often represented in the form of tube segments whose ends simply rest on piers regularly spaced. This design is very appealing, but it does not provide a full understanding of important challenges during installation steps. One of these challenges is that the tube segments are huge pieces that cannot be easily transported to the construction site, even more so when the terrain is steep or difficult to access or if the hyperloop route is far away from existing roads. To avoid the transport of tube segments, it is known notably from US9517901 and US20160229419 to manufacture and assemble the tubes on land with a movable tube fabrication machine (illustrated on Figure 9A) operable to move on land and directed along construction route. Alternatively, a moveable in-situ manufacturing system (illustrated on Figure 9B) may be located at a single location to make a number of tube sections (e.g., fifty tube sections), and then subsequently moved to a new location. In both cases, the tubes can be assembled on the pillars or on one or more support structures which extend between and are secured to pillars. As it is apparent from these disclosures, hyperloop routes can only be constructed if the moveable fabrication machine or the moveable manufacturing system can access the construction site. Moreover, among other drawbacks, it is worth mentioning that the energy supply might be tricky when moving along the construction route and, each time the machine/system would be moved, new electrical certifications may have to be obtained.

It is also known from WO2018196928 and US20080301889 to build viaducts with a first plurality of girders positioned on at least some piers and forming a first transportation pathway and with a second plurality of girders positioned on at least some piers and forming a second transportation pathway, alongside the first transportation pathway.

The aim of the present invention is therefore to remedy the drawbacks of the methods and structures of the prior art by providing a method for erecting an above-ground transportation structure which is compatible with rough terrains and for which the shipping of the different elements of the structure and their assembly is made easier.

For this purpose, a first subject of the present invention consists of a method for erecting a portion of a transportation structure comprising a first assembly of tube segments and a second assembly of tube segments, both assemblies being capable of being placed under low air pressure and through which pods may travel substantially free of air friction, the method comprising:
- (a) erecting a substructure comprising a plurality of piers, a first plurality of girders positioned on at least some of the piers and forming a first transportation pathway running from a first extremity of the substructure to a second one and a second plurality of girders positioned on at least some of the piers and forming a second transportation pathway, running from the first extremity of the substructure to the second one, alongside the first transportation pathway, the erecting step comprising conveying with vehicles girders of the first and second pluralities along the first transportation pathway formed by the girders of the first plurality of girders previously positioned, positioning the girders at their use position alternately at the second extremity of the first transportation pathway and at the second extremity of the second transportation pathway and having the vehicles return to the first extremity of the substructure along the second transportation pathway formed by the girders of the second plurality of girders previously positioned,
- (b) conveying, with vehicles, tube segments along only one transportation pathway selected among the first transportation pathway and the second transportation pathway, to the use position of each tube segment, positioning each tube segment at its use position alternately on the first plurality of girders and on the second plurality of girders and having the vehicles return along the other transportation pathway among the first transportation pathway and the second transportation pathway.

The method according to the invention may also have the optional features listed below, considered individually or in combination:
- the substructure does not comprise any platform forming a service pathway,
- the erecting step a) comprises a first sub-step of erecting the piers,
- the erecting step a) comprises an additional sub-step wherein a first section of the substructure comprising at least a pier, at least a girder from the first plurality of girders and at least a girder from the second plurality of girders is erected at a stocking site,
- in step a), the vehicles are set up with the girders at the first extremity of the substructure,
- the girders are positioned with a girder launcher crane supported by the substructure itself,
- the girders of the first plurality of girders are positioned after the girder of the first transportation pathway forming the second extremity of the substructure and the girders of the second plurality of girders are positioned after the girder of the first transportation pathway forming the second extremity of the substructure,
- in step b), the vehicles are set up with the tube segments at the first extremity of the substructure,
- in step b), the tube segments are first positioned at the second extremity of the substructure and then positioned one in front of the other in direction of the first extremity of the substructure.

As it is apparent, the invention is based on the construction of a substructure composed of piers and girders which can withstand the transportation of heavy parts like girders or tube segments and which can support the superstructure composed of tube segments once the superstructure is positioned on the substructure. The substructure comprises a circulation loop so that, starting from a stocking site, vehicles circulating on the portion of the substructure already in place can transport each additional element of the transportation structure to its position at the construction site and return to the stocking site without preventing other vehicles from transporting the next elements to the construction site. The transportation structure can thus be easily constructed whatever the terrain.

Other characteristics and advantages of the invention will be described in greater detail in the following description.

The invention will be better understood by reading the following description, which is provided purely for purposes of explanation and is in no way intended to be restrictive, with reference to:
- Figure 1, which is a view of a portion of transportation structure according to a first variant of the invention,
- Figure 2, which is a view of a portion of transportation structure according to a second variant of the invention,
- Figure 3, which is a longitudinal cut of the portion of transportation structure of Figure 2,
- Figure 4, which is a detailed view of a portion of transportation structure according to a third variant of the invention,
- Figure 5, which illustrates the erection of the piers of a portion of transportation structure,
- Figure 6, which illustrates the erection of a first section of the substructure of a portion of transportation structure,
- Figure 7, which illustrates loading girders at the stocking site on vehicles positioned on a first section of the substructure of a portion of transportation structure,
- Figure 8, which illustrates conveying girders to the construction site along one of the transportation pathways of the substructure,
- Figure 9, which illustrates positioning girders at the construction site,
- Figure 10, which illustrates vehicles returning to the stocking site along the other transportation pathway,
- Figure 11, which illustrates loading tube segments at the stocking site on vehicles positioned on a first section of the substructure of a portion of transportation structure,
- Figure 12, which illustrates conveying a first tube segment to the construction site along one of the transportation pathways of the substructure,
- Figure 13, which illustrates positioning the first tube segment at the construction site,
- Figure 14, which illustrates conveying a second tube segment to the construction site along one of the transportation pathways of the substructure,
- Figure 15, which illustrates positioning the second tube segment at the construction site,
- Figure 16, which is a general view of a portion of transportation structure under construction.

It should be noted that spatially relative terms such as "lower", "beneath", "inward", "inwards", "outward", "outwards"... as used in this application refer to the positions and orientations of the different elements of the portion of transportation structure once the latter has been erected. "Upstream" and "downstream" as used in this application refer to the direction of assembling when starting from a stocking site.

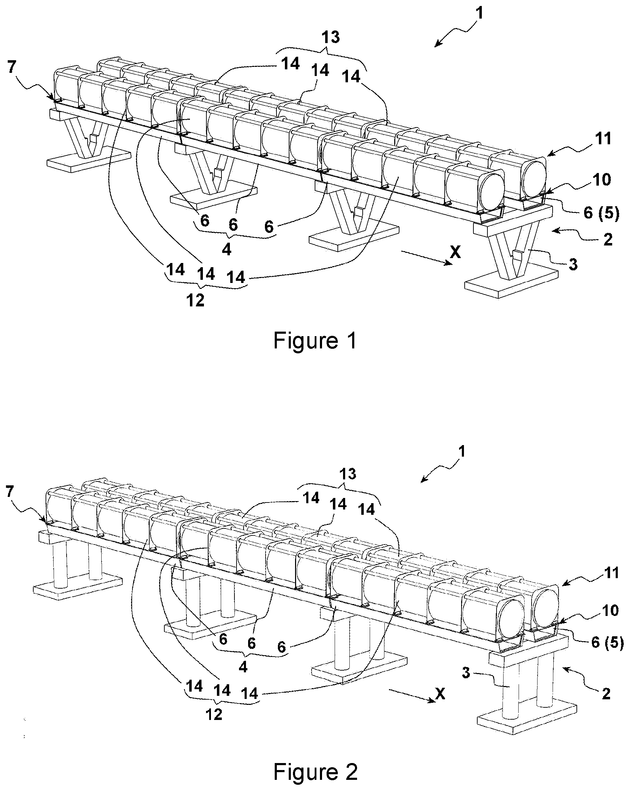

With reference to Figures 1 to 4, the portion of transportation structure 1 according to the invention first comprises a substructure 2 comprising a plurality of piers 3, a first plurality 4 of girders 6 positioned on at least a part of the piers (i.e. on at least some of the piers) and forming a first transportation pathway 7 running from a first extremity of the substructure to a second one, and a second plurality 5 of girders 6 positioned on at least a part of the piers (i.e. on at least some of the piers) and forming a second transportation pathway 10, running from the first extremity of the substructure to the second one, alongside the first transportation pathway 7.

A portion of transportation structure is composed of a plurality of sections, preferably at least 3 sections. A section is defined by the length of a girder. It preferably matches the distance between two consecutive piers along the longitudinal axis X of the portion of the transportation structure.

A pier 3 is an upright support for a structure or superstructure such as an arch or bridge. It supports the superstructure and transfers loads of the superstructure to the foundations. The shape of the piers according to the invention is not particularly limited as long as they can support the first and second above-mentioned transportation pathways.

According to a first variant illustrated on Figure 1, the piers are V-shaped. The V substantially extends in a plan perpendicular to the route, i.e. perpendicular to the girders' length. The piers comprise two inclined arms, extending outwards. Each arm can support one of the first and second transportation pathways. The piers according to this second variant can also comprise a pier cap, in the form of a horizontal beam linking the two arms. This pier cap provides additional seating for the girders and better distributes the load from the girders to the piers.

According to a second variant illustrated on Figure 2, the piers are pile bent piers, i.e. piers made of two or more columns supporting a pier cap. The piers substantially extend in a plan perpendicular to the route, i.e. perpendicular to the girders' length.

Optionally, the plurality of piers can be divided into a first plurality of piers and a second plurality of piers. The first plurality of piers supports the first plurality of girders and the second plurality of piers supports the second plurality of girders. The advantage of this design is that the space between the first and second transportation pathways and/or the level of the first and second transportation pathways can be easily adjusted to the topography of land.

Others shapes such as Y, X, H, hammerhead piers, cantilevered piers, trestle piers, solid piers, simple columns are also possible.

The piers are preferably substantially regularly spaced along the longitudinal axis X of the portion of the transportation structure.

The substructure 2 of the portion of transportation structure 1 according to the invention also comprises a first plurality 4 of girders 6 positioned on at least part of the piers 3 and forming a first transportation pathway 7 running from a first extremity of the substructure to a second one.

A girder 6 is a support beam used in construction. It can be made of steel or concrete or it can be a composite structure. It can be in the form of a I-beam cross section composed of two load-bearing flanges separated by a stabilizing web. It can be in the form of a plurality of longitudinal members joined by cross-members. In the variants illustrated in Figures 1 to 4, the girders are box girders, i.e. girders that form an enclosed tube with multiple walls. Box girders are advantageous notably in that electrical wires can be positioned inside.

Preferably each girder 6 extends from one pier to the adjacent one. In particular the first end of the girder rests on a given pier and the second end of the girder rests on an adjacent pier along the longitudinal axis X of the portion of the transportation route or structure. The girders can thus be easily installed by simply positioning them on the piers. Alternatively, a girder can extend on more than two piers.

The first plurality 4 of girders 6 is positioned along the longitudinal axis of the portion of the transportation route or structure, so as to form a first transportation pathway 7. By transportation pathway, it is meant at least one continuous track designed to withstand the transportation of heavy parts like girders or tube segments with vehicles and designed to support the superstructure once the latter is positioned on the transportation pathway. For the sake of clarity, a transportation pathway is a temporary pathway; it allows the transportation of elements only during the erecting phase. Once an assembly of tube segments has been positioned on the transportation pathway, the latter is not a pathway anymore. The transportation pathway extends from the first longitudinal extremity of the substructure to the second longitudinal extremity of the substructure, whatever the length of the substructure.

According to a first variant of the transportation pathway illustrated on Figures 1 to 3, the first transportation pathway 7 is composed of one single continuous track of girders. In other words, all the girders 6 of the first plurality 4 of girders are positioned successively and continuously one after the other along the longitudinal axis X of the portion of the transportation structure. In that case, the girders are large enough to have vehicles circulate on them. This transportation pathway can be a substantially flat surface of metal or of concrete, preferably the upper surface of the girders. It can also be a railroad line which is part of the upper surface of the girders.

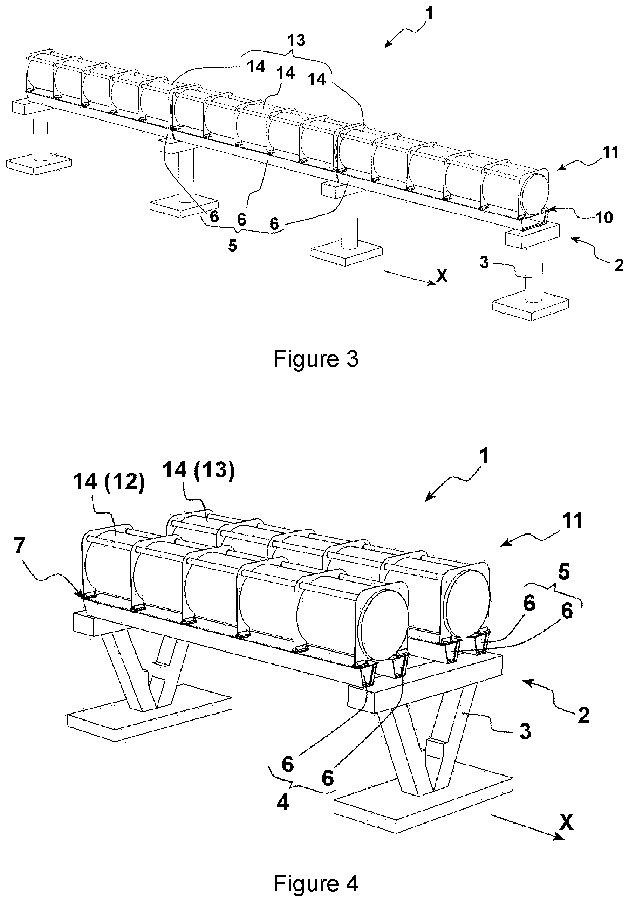

According to a second variant of the first transportation pathway 7 illustrated on Figure 4, the transportation pathway is composed of two continuous tracks of girders 6, running parallel to one another. In other words, half the girders 6 of the first plurality 4 of girders are positioned successively and continuously one after the other along the longitudinal axis of the portion of the transportation structure and half the girders 6 of the first plurality 4 of girders are positioned successively and continuously one after the other and parallel to the first half. In that case, the girders are not large enough to have vehicles circulate on them but the two continuous tracks are spaced from one another so that vehicles can circulate with their inward wheels on the inward track and their outward wheels on the outward track. Rail beams can be part of the upper surface of the girders so that the two continuous tracks form a railroad line.

The substructure 2 of the portion of transportation structure 1 according to the invention further comprises a second plurality 5 of girders 6 positioned on at least a part of the piers and forming a second transportation pathway 10, running from the first extremity of the substructure to the second one, alongside the first transportation pathway 7. The definition and variants detailed in relation to the first transportation pathway apply here. The definition and variants detailed in relation to the first plurality of girders apply here. Girders of the first plurality and girders of the second plurality can be identical to ease logistics.

The second transportation pathway 10 runs alongside the first transportation pathway 7. By alongside, it is meant that both transportation pathways are substantially parallel to each other and run adjacent to each other. It is not limited to transportation pathways at the same level and/or rigorously parallel. The space between the first and second transportation pathways and/or the level of the first and second transportation pathways can be adjusted to the topography of land.

The first plurality 4, respectively second plurality 5, of girders 6 can be positioned on all the piers as illustrated in the variants of Figures 1 to 4. Generally speaking, the first plurality 4, respectively second plurality 5, of girders 6 is positioned on all the piers when each pier extends transversely enough to support both the first plurality of girders and the second plurality of girders. Alternatively, the first plurality 4, respectively second plurality 5, of girders 6 is positioned only on a part of the piers, as in the case for example of piers in the form of columns where half of the piers support the first plurality of girders and half of the piers support the second plurality of girders.

Optionally, bearings are positioned between the piers and the girders. A bearing is a device which supports the girders and transfer loads and movements from the girders and superstructure to the substructure and foundation. The bearings permit controlled movement and decrease the stress involved.

Thanks to the first plurality 4 of girders 6 and to the second plurality 5 of girders 6, during the construction phase, vehicles circulating on the part of the substructure already in place can easily transport each additional element of the portion of transportation structure to its position along one rooftop transportation pathway and return to the stocking site along the other rooftop transportation pathway. Access to the ground along the construction route is not necessary anymore. This advantage will be further detailed when describing the erection method. During operation, the first plurality of girders and the second plurality of girders support the tube segments and contribute to the straightness of the assemblies of tube segments. This straightness is important for the smooth traveling of the pods within the tube. Moreover, the combination of girders and tube segments acts as a beam which significantly increases the lateral torsional buckling of the structure.

Optionally, the substructure 2 of the portion of transportation structure 1 according to the invention does not comprise any platform, either positioned on the piers or connected to the girders of either the first or the second transportation pathway. A platform is defined as a light structure suitable for vehicle traffic. The platforms are preferably made of steel. They preferably comprise a traffic deck, i.e. a surface suitable for vehicle traffic, possibly reinforced underneath by longitudinal reinforcements and/or transversal reinforcements. These reinforcements add structural rigidity to the traffic deck. The traffic deck can also comprise safety rails along the longitudinal edges of the traffic deck for safety reasons. The traffic deck, the reinforcements and the safety rails are preferably made of steel. The traffic deck is preferably a perforated surface, like a perforated steel sheet or metal grid.

Consequently, for this option, the substructure 2 of the portion of transportation structure 1 according to the invention does not comprises any service pathway formed by a plurality of platforms positioned along the longitudinal axis X. By service pathway, it is meant at least one continuous track designed to withstand vehicle traffic. It differs from a transportation pathway in that it is not designed to withstand the transportation of heavy parts like girders or tube segments and it is not designed to support the superstructure.

With reference to Figures 1 to 4, the transportation structure according to the invention further comprises a superstructure 11 comprising a first assembly 12 of tube segments 14 positioned on the first transportation pathway, the first assembly being capable of being placed under low air pressure and capable of allowing the circulation of pods travelling substantially free of air friction in the tube segments. By "low air pressure", it is meant an air pressure below atmospheric pressure, preferably below or equal to 10 kPa, more preferably between 10 Pa and 10 kPa.

The design of the tube segments 14 is not limited as long as they can be connected to one another, by their longitudinal ends, directly or indirectly, along the longitudinal axis so as to form an assembly as described above. In particular, the cross-section of the tube is not limited. It can notably be a circular cross-section or a polygonal cross-section. Practically speaking, the capability of the assembly to be placed under low air pressure is conferred by the features of the tube segment wall, the features of the connection between tube segments and the pumping equipment. In particular, the tube segment wall has to be airtight. Different ways of making a tube wall airtight are well known and the person skilled in the art will know how to select the features of the wall in each specific case. It can be for example a metallic tube made of welded plates or a metallic structure covered by an airtight membrane. Also, the connection between two tube segments has to be airtight. The airtightness of the connection can notably be provided by welding, by the addition of components such as an elastomer between tube segments that are bolted or clamped, or by means of an expansion joint. The person skilled in the art knows how to make connections airtight and will adapt the connection to each specific case. Also, the pumping equipment has to be correctly dimensioned so that a low air pressure can be reached and maintained in the assembly of tube segments, while taking into account the air leakages under operation. The person skilled in the art knows how to do so and will adapt the pumping equipment to each specific case.

Practically speaking, the capability of the assembly to allow the circulation of pods travelling substantially free of air friction in the tube segments is conferred by the infrastructure positioned inside the tube segments and which provide notably the levitation/suspension, propulsion, braking... Such infrastructures are already well known and the person skilled in the art will know how to adapt the infrastructure to each specific case.

Preferably, tube segments comprise legs distributed along the length of the segment and suitable for a tube segment to stand alone on the substructure on its legs. The number of legs and their position on the tube segment can be optimized during the structural design phase.

The tube segments are preferably made of steel. Steel has the advantages of being light, easily vacuum-tight and recyclable.

The tube segments can be connected to external and/or internal components along their length and/or at their ends. These components can be very diverse. To name a few of them, they can be stiffeners, photovoltaic panels, sensors...

With reference to Figures 1 to 4, the superstructure 11 according to the invention further comprises a second assembly 13 of tube segments 14 positioned on the second transportation pathway, the second assembly being capable of being placed under low air pressure and capable of allowing the circulation of pods travelling substantially free of air friction in the tube segments. The characteristics and variants of the tube segments of the first assembly detailed above also apply to the tube segments of the second assembly. Tube segments of the first assembly and tube segments of the second assembly can be identical to ease logistics.

According to one variant, the superstructure 11 according to the invention further comprises a third assembly of tube segments 14 positioned on the first assembly 12 of tube segments and/or a fourth assembly of tube segments 14 positioned on the second assembly 13 of tube segments. In particular each tube segment of the third assembly of tube segments is positioned on a tube segment of the first assembly of tube segments and/or each tube segment of the fourth assembly of tube segments is positioned on a tube segment of the second assembly of tube segments. This positioning limits the footprint of the transportation structure. It also reduces the amount of switches and facilitate surface use, in particular for deviating towards stations. Optionally, each tube segment of the first assembly of tube segments is coupled to a tube segment of the third assembly of tube segments before being conveyed to the construction site. Similarly, each tube segment of the second assembly of tube segments is coupled to a tube segment of the fourth assembly of tube segments before being conveyed to the construction site. The coupling can be done with transversal connectors and/or with a structure surrounding the two tube segments. In that case, the assemblies of tube segments are conveyed along either the first transportation pathway 7 or the second transportation pathway 10 as it will be further detailed when describing the erection method. It speeds up the transportation of the elements to the construction site and thus shortens the erection phase. According to that variant, the transportation pathways can be made of a plurality of girders 6 indifferently laid out in one single continuous track of girders or in two continuous tracks of girders 6, running parallel to one another.

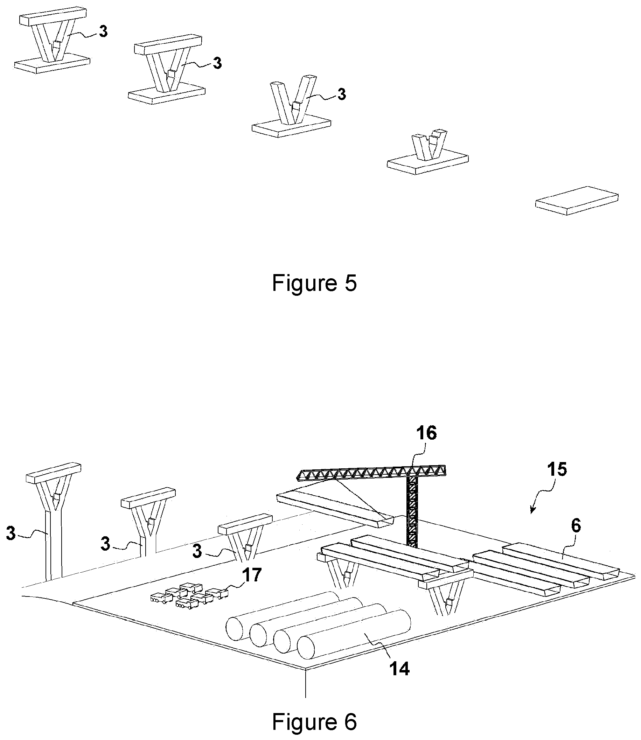

With reference to Figures 5 to 16, the method for erecting the portion 1 of the transportation structure according to the invention will now be described. Overall, this method comprises a first step of erecting the substructure 2 and a second step of erecting the superstructure 11. The step of erecting the substructure is described first.

In a first step of erecting the substructure 2, the piers 3 of the portion 1 of the transportation structure are erected. They can be erected with any suitable method, such as panel formwork for example. Their erecting method includes the erection of piers foundations as required by the nature of the ground. This step can be done before the step of positioning the girders 6 or at least partially at the same time as the step of positioning the girders. In other words, the piers can be erected well before the girder positioning starts, for example weeks before. This notably gives time for concrete drying and soil compaction. Alternatively, some piers are still being erected when the girder positioning starts on the first erected piers.

As the footprint for erecting piers is limited and only light-duty vehicles are needed (bulldozers, concrete mixer trucks), the piers are preferably erected by ground access to the construction site of each pier.

In a second step of erecting the substructure 2, the girders 6 of the portion 1 of transportation structure are erected.

As mentioned above, the erection of the girders starts from a stocking site 15 where at least part of the elements of the transportation structure are stocked. Depending on the ease of transporting the elements up to the stocking site, some elements can be manufactured at the stocking site in manufacturing facilities. It can for example be the case of the girders and/or of the tube segments which are massive pieces. Manufacturing some elements on the stocking site minimizes the erection time at the construction site and it allows for better quality control of the manufactured elements.

The stocking site 15 is preferably located at the future site of a station, in particular a passenger and/or freight station. This limits the footprint of the construction phase. It also limits the civil work. In particular, the civil work done to build the stocking site and its optional manufacturing facilities can be used for erecting the station. The stocking site is preferably located at the ground level.

As illustrated on Figure 6, the first sub-step in erecting the girders 6 is at the stocking site 15. This sub-step comprises the erection, at the stocking site, of a first section of the substructure comprising at least one pier 3, at least a girder 6 from the first plurality of girders and at least a girder 6 from the second plurality of girders. In particular, this sub-step comprises positioning a girder from the first plurality of girders on at least one pier and positioning a girder from the first plurality of girders on at least one pier. More particularly, the girder of the first plurality and the girder of the second plurality are positioned on the same at least one pier. This positioning is preferably done with a crane 16 which can pick the elements on the stocking site and move them to the piers.

According to a first variant, the first section of substructure comprises one single pier. This is notably the case when the stocking site is positioned on a high ground. The first extremity of the first girder of the first plurality of girders can then rest on the high ground while its second extremity can rest on the pier positioned downhill. Similarly, the first extremity of the first girder of the second plurality of girders can rest on the high ground while its second extremity can rest on the pier positioned downhill. In that case, the first sub-step comprises positioning a girder from the first plurality of girders between the high ground and the pier and positioning a girder from the second plurality of girders between the high ground and the pier.

According to a second variant illustrated on Figure 6, the first section of substructure comprises two piers. This is notably the case when the stocking site is positioned on a substantially flat ground. The first extremity of the first girder of the first plurality of girders can then rest on the first pier while its second extremity can rest on the second pier. Similarly, the first extremity of the first girder of the second plurality of girders can rest on the first pier while its second extremity can rest on the second pier In that case, the first sub-step comprises positioning a girder from the first plurality of girders on the two piers and positioning a girder from the second plurality of girders on the two piers.

This first sub-step can comprise the erection, at the stocking site, of other sections of the substructure. The number of sections erected at the stocking site is conditioned by the ability of the crane from the stocking site to position the elements on the piers.

Once the first section of the substructure has been erected, it comprises a first extremity adjacent to the stocking site and a second extremity at its opposite end. The first extremity of the first section corresponds to the first extremity of the substructure of the portion of transportation structure erected according to the invention. Consequently, the position of the first extremity of the substructure of the portion of transportation structure erected according to the invention will not change over time during the erection of the portion of transportation structure. As for the second extremity of the first section, it corresponds to the second extremity of the substructure under construction, as long as no other section of substructure has been erected downstream of the first section. In other words, the position of the second extremity of the substructure under construction will change over time each time a new section is erected downstream of the already erected sections of transportation structure.

Thanks to the elements composing the erected substructure, vehicles 17 can circulate on the first transportation pathway 7 formed by at least one girder 6 of the first plurality 4 of girders and on the second transportation pathway 10 formed by at least one girder 6 of the second plurality 5 of girders. In particular, vehicles moving the elements to be positioned along the construction route can circulate on the first transportation pathway, starting from the first extremity and up to the second extremity of the substructure under construction. Once the elements have reached their use position, the vehicles can return to the first extremity via the second transportation pathway.

Consequently, in a second sub-step in erecting the girders 6, another section of the substructure can be erected as detailed hereafter. This section is referred to below as "the second section" for simplicity, assuming that only a first section has been erected at the stocking site.

The second section of the substructure comprises at least one girder 6 of the first plurality 4 of girders, at least one girder 6 of the second plurality 5 of girders and at least one pier 3 of the substructure.

As explained above with regard to the pier erection, at least an additional pier has been erected downstream of the first section of the substructure.

Vehicles 17 suitable for the transport of heavy elements are positioned on the first section of the substructure, in particular on the first transportation pathway 7, more particularly on the first girder 6 of the first plurality 4 of girders. The vehicles can be lifted with a crane 16 or can reach their position with an access ramp or any other suitable equipment. The type of vehicles is not limited. It can be wheeled vehicles, such as trucks or train locomotives. Depending on the type of vehicles, the element(s) to be transported can be either loaded on one vehicle or loaded on several vehicles at the same time or the vehicle can be simply connected to the element(s), as in the case of a train locomotive for the transport of element(s) equipped of railroad wheels. In this description, the terms "set up" and "pair" are used to designate equally the loading of the vehicle(s) with an element and the connection of the vehicle(s) with an element. The term "freed" is used to designate equally the unloading of an element from the vehicle(s) and the disconnection of the vehicle(s) with an element.

Some vehicles are set up with the girder(s) of the second section of the substructure. In particular, vehicle(s) are set up with at least one girder 6 of the first plurality 4 of girders and vehicle(s) are set up with at least one girder 6 of the second plurality 5 of girders. The elements can be conveyed from the stocking site on the first section of the substructure or can be lifted from the stocking site up to the first section of the substructure with a crane. In the first case, they can be conveyed by the vehicles themselves. In the second case, the vehicles can be positioned and then set up.

The girders are then conveyed with the vehicles, along the first transportation pathway 7, from the first extremity to the second extremity of the substructure under construction, which is adjacent to their use position. In particular:
- The at least one girder 6 of the first plurality 4 of girders is conveyed along the first transportation pathway 7 formed by the girder(s) of the first plurality of girders positioned on the first section of substructure,
- The at least one girder 6 of the second plurality 5 of girders is conveyed along the first transportation pathway 7, i.e. along the same transportation pathway as the at least one girder 6 of the first plurality of girders.

The order in which the girders are paired with vehicles and conveyed to the second extremity is not limited. Also, some girders can be conveyed to the second extremity while others are still being set up on vehicles. If girders of the first plurality 4 and girders of the second plurality 5 differ in design, they are preferably conveyed to the second extremity alternately, to ease their positioning.

Once a girder has been conveyed to the second extremity of the substructure under construction, it is positioned at its use position, i.e. its position of service in the substructure. In particular:
- The at least one girder 6 of the first plurality 4 of girders is positioned downstream of the first transportation pathway 7. In particular, it is positioned after the girder of the first transportation pathway forming the second extremity of the substructure under construction. More particularly, it is positioned in line with the girder 4 of the first transportation pathway 7 forming the second extremity along the longitudinal axis X. Even more particularly, it is positioned so that a first end of the girder rests on the pier forming the second extremity of the first section of substructure and a second end of the girder rests on the at least one additional pier erected downstream of the first section of substructure. The at least one girder of the first plurality of girders is preferably positioned with a crane 18, more preferably with a girder launcher crane, supported by the substructure itself.
- The at least one girder 6 of the second plurality 5 of girders is further positioned downstream of the second transportation pathway 10. In particular, it is positioned after the girder of the second transportation pathway forming the second extremity of the substructure under construction. More particularly, it is positioned in line, along the longitudinal axis, with the girder of the second transportation pathway forming the second extremity. Even more particularly, it is positioned so that a first end of the girder rests on the pier forming the second extremity of the first section of substructure and a second end of the girder rests on the additional pier erected downstream of the first section of substructure. The at least one girder of the second plurality of girders is preferably positioned with the crane 18, more preferably with the girder launcher crane.

The use of a crane 18 supported by the substructure is beneficial. It further limits the footprint of the erection by eliminating the need for ground access to the construction site and ground preparation for a crane. It also makes the erecting method further independent of the topography and roughness of the terrain.

The girders are positioned alternately downstream of the first transportation pathway 7 and downstream of the second transportation pathway 10, more preferably with the help of the girder launcher crane. The order in which the girders are alternately positioned is not limited. Also, some girders can be positioned while others are still being paired with vehicles or conveyed to the second extremity.

Once a girder has been positioned, the corresponding freed vehicle(s) can return to the first extremity of the substructure along the second transportation pathway 10. In particular:
- The vehicle(s) 17 freed from the at least one girder 6 of the first plurality 4 of girders is moved from the first transportation pathway 7 to the second transportation pathway 10. The vehicle(s) can be lifted by a crane and put down on the second transportation pathway. Preferably it is lifted with the girder launcher crane.
- The vehicle(s) 17 freed from the at least one girder 6 of the second plurality 5 of girders is moved from the first transportation pathway 7 to the second transportation pathway 10. The vehicle(s) can be lifted by a crane and put down on the second transportation pathway. Preferably it is lifted with the girder launcher crane.

Once a second section of the substructure has been erected as detailed above, other sections of the substructure can be erected one after the other according to a similar process and as detailed below in relation to the erection of the xth section of the substructure.

The xth section of the substructure comprises at least the nth girder 6 of the first plurality 4 of girders, at least the nth girder 6 of the second plurality 5 of girders and at least the zth pier 3 of the substructure. By default, x, z and n are different. In case where each section of the substructure comprises one single girder of the first plurality of girders and one single girder of the second plurality of girders, x is equal to n. In that case, the nth girder of the first plurality of girders is also the xth and the nth girder of the second plurality of girders is also the xth. In case where the first section comprises 2 piers and both transportation pathways are composed of one single continuous track of girders and each section of the substructure other than the first one comprises one single pier, z is equal to n+1.

At least the zth pier 3 has first been erected downstream of the (x-1) first sections.

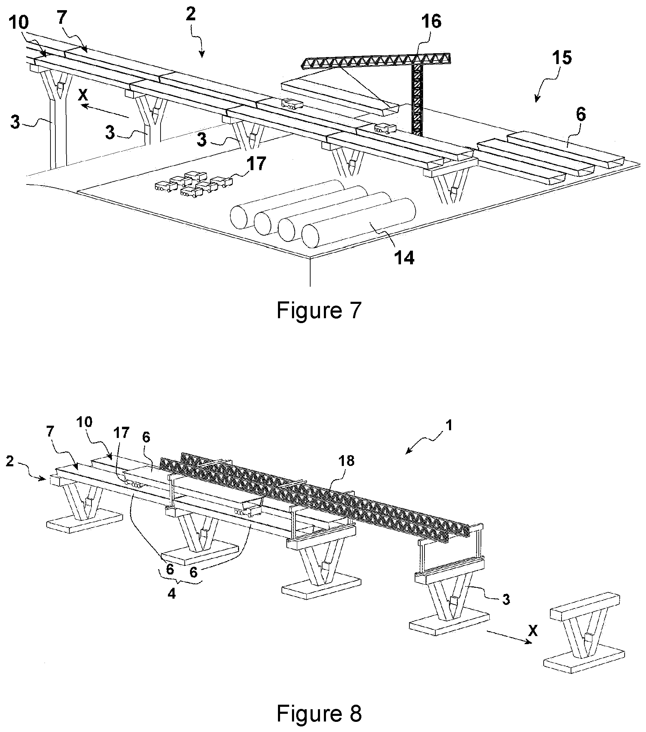

As illustrated on Figure 7, the vehicles 17 which have returned to the first extremity of the substructure after being freed from the girders of a previous section(s) of the substructure are set up with the girders of the xth section of the substructure. In particular, vehicle(s) are set up with the nth girder of the first plurality of girders and vehicle(s) are set up with the nth girder of the second plurality of girders. If the xth section comprises additional girder(s), they are paired with the vehicles similarly.

As illustrated on Figure 8, starting from the first extremity of the substructure, the girders 6 of the xth section of the substructure are conveyed with vehicles, along the first transportation pathway 7, from the first extremity to the second extremity of the substructure under construction, which is adjacent to their use position. In particular:
- The nth girder 6 of the first plurality 4 of girders is conveyed along the first transportation pathway 7 formed by the girders of the first plurality of girders previously positioned. In particular, it is conveyed along the first transportation pathway 7 formed by the (n-1) girders of the first plurality of girders previously positioned.
- The nth girder 6 of the second plurality 5 of girders is conveyed along the first transportation pathway 7, i.e. along the same transportation pathway as the nth girder 6 of the first plurality of girders.

If the xth section comprises additional girder(s), they are conveyed similarly. The order in which the girders are paired with vehicles and conveyed to the second extremity is not limited. Also, some girders can be conveyed to the second extremity while others are still being paired with vehicles. If girders of the first plurality 4 and girders of the second plurality 5 differ in design, they are preferably conveyed to the second extremity alternately, to ease their positioning.

As illustrated on Figures 9 and 10, once a girder has been conveyed to the second extremity of the substructure under construction, it is positioned at its use position. In particular:
- The nth girder 6 of the first plurality of girders is positioned downstream of the first transportation pathway 7. In particular, it is positioned after the girder of the first transportation pathway forming the second extremity of the substructure under construction. More particularly, it is positioned in line, along the longitudinal axis, with the (n-1)th girder of the first transportation pathway. Even more particularly, it is positioned so that a first end of the nth girder rests on the pier forming the second extremity (the (z-1)th pier) and a second end of the nth girder rests on the zth pier erected downstream of the substructure. The nth girder of the first plurality of girders is preferably positioned with a crane 18, more preferably with a girder launcher crane, supported by the substructure itself,
- The nth girder 6 of the second plurality 5 of girders is further positioned downstream of the second transportation pathway 10. In particular, it is positioned after the girder of the second transportation pathway forming the second extremity of the substructure under construction. More particularly, it is positioned in line, along the longitudinal axis, with the (n-1)th girder of the second transportation pathway. Even more particularly, it is positioned so that a first end of the nth girder rests on the pier forming the second extremity (the (z-1)th pier) and a second end of the nth girder rests on the zth pier erected downstream of the substructure. In other words, it is positioned alongside the nth girder of the first plurality. The nth girder of the second plurality of girders is preferably positioned with the crane 18, more preferably with the girder launcher crane.

The girders are positioned alternately downstream of the first transportation pathway 7 and downstream of the second transportation pathway 10, more preferably with the help of the girder launcher crane. The order in which the girders of the xth section are alternately positioned is not limited. Also, some girders of the xth section can be positioned while other girders of the xth section or of subsequent sections are being paired with vehicles or conveyed to the second extremity.

As illustrated on Figures 9 and 10, once a girder of the xth section of substructure has been positioned, the corresponding freed vehicle(s) can return to the first extremity of the substructure along the second transportation pathway 10. In particular:
- The vehicle(s) freed from the nth girder of the first plurality of girders is moved from the first transportation pathway 7 to the second transportation pathway 10,
- The vehicle(s) freed from the nth girder of the second plurality of girders is moved from the first transportation pathway 7 to the second transportation pathway 10.

The vehicle(s) can be lifted by a crane and put down on the second transportation pathway 10. Preferably it is lifted with the girder launcher crane.

If the xth section comprises additional girder(s), they are positioned similarly and the corresponding vehicles return to the first extremity similarly.

At the end of the step of erecting the substructure, the last girder of the first plurality of girders and the last girder of the second plurality of girder are positioned on the last piers of the substructure. These piers can be adjacent to or shared with a second portion of transportation structure erected or being erected as an extension of the relevant portion of transportation structure along the longitudinal axis of the transportation route. This second portion of transportation structure is erected from a second stocking site, possibly at the future site of a station, located downstream of the relevant portion. This second portion of transportation structure is built by erecting its substructure backwards of the erection of the substructure of the relevant portion. In other words, each portion is built from a stocking site in direction of another stocking site and at some point, the two portions join. The last girder of the first plurality of girders of the relevant portion is thus adjacent to the last girder of the first plurality of the second portion so that there is a continuity in the first transportation pathway. Similarly, the last girder of the second plurality of girders of the relevant portion is adjacent to the last girder of the second plurality of the second portion so that there is a continuity in the second transportation pathway.

Once all the sections of the substructure of the portion of the transportation structure have been assembled one after the other, the superstructure can be erected.

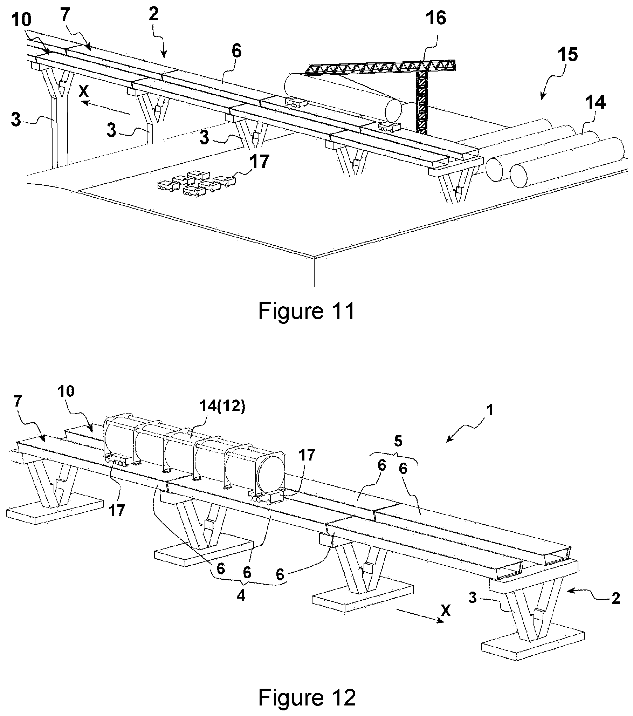

Overall, and as illustrated on Figures 11 to 16, the superstructure assembling is done by conveying, with vehicles, tube segments 14 along only one transportation pathway selected among the first transportation pathway 7 and the second transportation pathway 10 to the use position of each tube segment, positioning each tube segment alternately on the first plurality of girders and on the second plurality of girders so that the first assembly 12 of tube segments and the second assembly 13 of tube segments are built and having the vehicles return along the other transportation pathway among the first transportation pathway and the second transportation pathway. In other words, the first transportation pathway and the second transportation pathway form a loop on which the vehicles can rotate clockwise or counterclockwise. The rotation can be in the same way as for the substructure assembling (i.e. conveying along the first transportation pathway and returning along the second transportation pathway) or the other way (i.e. conveying along the second transportation pathway and returning along the first transportation pathway). The positioning of the tube segments is alternated between the first plurality of girders and the second plurality of girders so that the remaining portions of the first transportation pathway and of the second transportation pathway are of similar length at all times, with maintains the loop.

As the tube segments are positioned on the substructure and block the transportation pathways, the superstructure assembling is done backwards compared to the substructure assembling. In other words, the tube segments are first positioned at the second extremity of the substructure and then positioned one in front of the other in direction of the first extremity of the substructure, i.e. one upstream of the other, while alternating between the first plurality of girders and the second plurality of girders.

In particular, in a first step illustrated on Figures 11 to 13, a first tube segment 14 is conveyed with vehicle(s) 17, along the first transportation pathway 7, to the second extremity of the substructure 2, which is its use position. The vehicle(s) are freed from the first tube segment and can return along the second transportation pathway 10. The first tube segment 14 is positioned on the last girder 6, of either the first transportation pathway or the second transportation pathway, forming the second extremity of the substructure. Freeing the vehicle from the tube segment and positioning the tube segment can be done with a crane, possibly a girder launcher crane. In the case where a second portion of transportation structure is adjacent to the last girder of the substructure, the first tube segment can be connected to a tube segment of the second portion, preferably in an airtight connection.

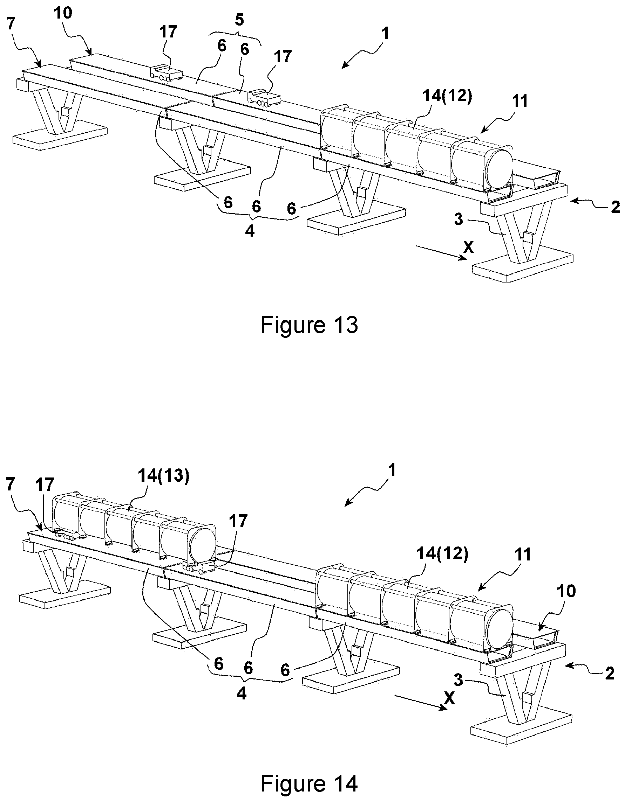

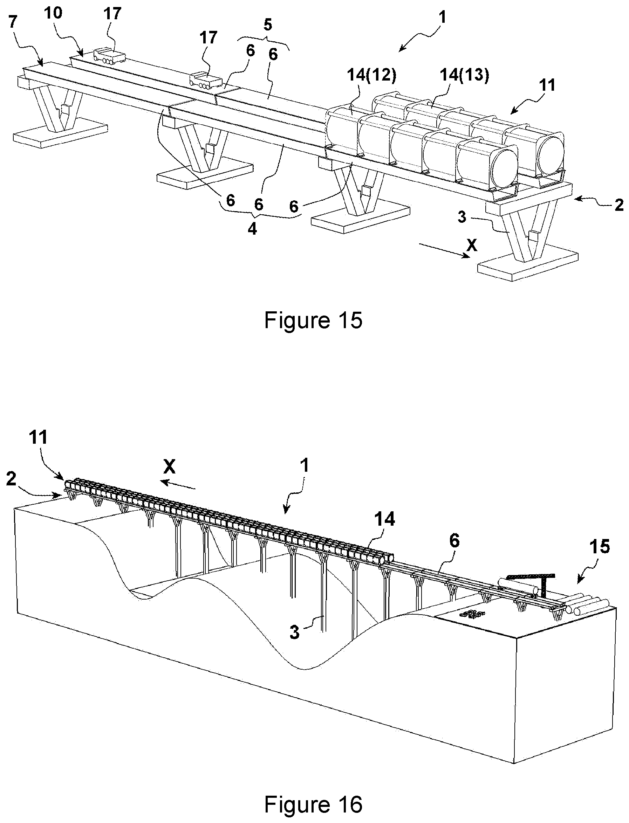

In a second step illustrated on Figures 14 and 15, a second tube segment 14 is conveyed with vehicle(s) 17 along the first transportation pathway 7, to the second extremity of the substructure 2, which is its use position. The vehicle(s) are freed from the second tube segment and can return along the second transportation pathway 10. The second tube segment is positioned on the other transportation pathway (compared to the first tube segment), at the second extremity of the substructure and on the side of the first tube segment.

A third tube segment, conveyed along the same transportation pathway as the first and second tube segments, can then be positioned on the same transportation pathway as the first tube segment, adjacent to the first tube segment and upstream along the longitudinal axis X. The first and third segments can then be connected to one another, preferably in an airtight connection. Alternatively, the third tube segment can be positioned on the same transportation pathway as the second tube segment adjacent to the second tube segment and upstream along the longitudinal axis X. The second and third segments can then be connected to one another, preferably in an airtight connection.

The next tube segments are conveyed and positioned similarly until the last tube segment is positioned at the first extremity of the substructure.

Preferably, the tube segments are stocked only at the stocking site 15 and conveyed from the stocking site. In that case, the vehicles are set up at the first extremity of the substructure with tube segments and they convey them from this first extremity to their use position. Once freed, the vehicles return to the first extremity.

In the case where the superstructure comprises a third assembly of tube segments 14 positioned on the first assembly and/or a fourth assembly of tube segments 14 positioned on the second assembly, the tube segments of all assemblies can be conveyed individually along one single transportation pathway, as described above in different embodiments. At their use position, a tube segment of the first assembly is first positioned on the first transportation pathway 7 and then a tube segment of the third assembly is positioned on the tube segment of the first assembly. Similarly, a tube segment of the second assembly is first positioned on the second transportation pathway 10 and then a tube segment of the fourth assembly is positioned on the tube segment of the second assembly. Alternatively, each tube segment of the first assembly of tube segments is coupled to a tube segment of the second assembly of tube segments at the stocking position and the coupled segments are then conveyed along one single transportation pathway, as described above in different embodiments. Similarly, each tube segment of the second assembly of tube segments is coupled to a tube segment of the fourth assembly of tube segments at the stocking position and the coupled segments are then conveyed along one single transportation pathway. Tube segments of all assemblies can be identical to ease logistics.

## Claims

1. Method for erecting a portion (1) of a transportation structure comprising a first assembly (12) of tube segments (14) and a second assembly (13) of tube segments (14), both assemblies being capable of being placed under low air pressure and through which pods may travel substantially free of air friction, the method comprising:
- (a) erecting a substructure (2) comprising a plurality of piers (3), a first plurality (4) of girders (6) positioned on at least some of the piers and forming a first transportation pathway (7) running from a first extremity of the substructure to a second one and a second plurality (5) of girders (6) positioned on at least some of the piers and forming a second transportation pathway (10), running from the first extremity of the substructure to the second one, alongside the first transportation pathway, the erecting step comprising conveying with vehicles (17) girders (6) of the first and second pluralities along the first transportation pathway (7) formed by the girders of the first plurality of girders previously positioned, positioning the girders at their use position alternately at the second extremity of the first transportation pathway and at the second extremity of the second transportation pathway and having the vehicles return to the first extremity of the substructure along the second transportation pathway (10) formed by the girders of the second plurality of girders previously positioned,
- (b) conveying, with vehicles (17), tube segments (14) along only one transportation pathway selected among the first transportation pathway (7) and the second transportation pathway (10), to the use position of each tube segment, positioning each tube segment at its use position alternately on the first plurality of girders and on the second plurality of girders and having the vehicles return along the other transportation pathway among the first transportation pathway (7) and the second transportation pathway (10).

2. Method according to claim 1 wherein the substructure (2) does not comprise any platform forming a service pathway.

3. Method according to any one of the preceding claims wherein the erecting step a) comprises a first sub-step of erecting the piers (3).

4. Method according to any one of the preceding claims wherein the erecting step a) comprises an additional sub-step wherein a first section of the substructure comprising at least a pier (3), at least a girder (6) from the first plurality (4) of girders and at least a girder (6) from the second plurality (5) of girders is erected at a stocking site (15).

5. Method according to any one of the preceding claims wherein, in step a), the vehicles (17) are set up with the girders (6) at the first extremity of the substructure.

6. Method according to any one of the preceding claims wherein the girders (6) are positioned with a girder launcher crane (18) supported by the substructure (2) itself.

7. Method according to any one of the preceding claims wherein the girders (6) of the first plurality (4) of girders are positioned after the girder of the first transportation pathway (7) forming the second extremity of the substructure and the girders (6) of the second plurality (5) of girders are positioned after the girder of the first transportation pathway (7) forming the second extremity of the substructure.

8. Method according to any one of the preceding claims wherein, in step b), the vehicles (17) are set up with the tube segments (14) at the first extremity of the substructure.

9. Method according to any one of the preceding claims wherein, in step b), the tube segments (14) are first positioned at the second extremity of the substructure and then positioned one in front of the other in direction of the first extremity of the substructure.

## Patentansprüche

1. Verfahren zum Errichten eines Abschnitts (1) einer Transportstruktur, umfassend eine erste Anordnung (12) von Rohrsegmenten (14) und eine zweite Anordnung (13) von Rohrsegmenten (14), wobei beide Anordnungen in der Lage sind, unter niedrigen Luftdruck gesetzt zu werden und durch die sich Kapseln im Wesentlichen frei von Luftreibung bewegen können, das Verfahren umfassend:
- (a) Errichten eines Unterbaus (2), umfassend eine Vielzahl von Pfeilern (3), eine erste Vielzahl (4) von Trägern (6), die auf mindestens einigen der Pfeiler positioniert sind und einen ersten Transportweg (7) bilden, der von einem ersten Ende des Unterbaus zu einem zweiten Ende verläuft, eine zweite Vielzahl (5) von Trägern (6), die auf mindestens einigen der Pfeiler positioniert sind und einen zweiten Transportweg (10) bilden, der von dem ersten Ende des Unterbaus bis zu dem zweiten Ende entlang des ersten Transportwegs verläuft, wobei der Errichtungsschritt ein Befördern von Trägern (6) der ersten und zweiten Vielzahl mit Fahrzeugen (17) entlang des ersten Transportwegs (7), der durch die Träger der ersten Vielzahl von zuvor positionierten Trägern gebildet ist, ein Positionieren der Träger in ihrer Gebrauchsposition abwechselnd an dem zweiten Ende des ersten Transportwegs und an dem zweiten Ende des zweiten Transportwegs und ein Bewirken, dass die Fahrzeuge entlang des zweiten Transportwegs (10), der durch die Träger der zweiten Vielzahl von zuvor positionierten Trägern gebildet ist, zu dem ersten Ende des Unterbaus zurückkehren, umfasst,
- (b) Befördern, mit Fahrzeugen (17), von Rohrsegmenten (14) entlang nur eines Transportwegs, der ausgewählt ist aus dem ersten Transportweg (7) und dem zweiten Transportweg (10), zu der Verwendungsposition von jedem Rohrsegment, Positionieren jedes Rohrsegments an seiner Verwendungsposition abwechselnd auf der ersten Vielzahl von Trägern und auf der zweiten Vielzahl von Trägern und Bewirken, dass die Fahrzeuge entlang des anderen Transportwegs von dem ersten Transportweg (7) und dem zweiten Transportweg (10) zurückkehren.

2. Verfahren nach Anspruch 1, wobei der Unterbau (2) keine Plattform umfasst, die einen Serviceweg bildet.

3. Verfahren nach einem der vorherigen Ansprüche, wobei der Errichtungsschritt a) einen ersten Teilschritt zum Errichten der Pfeiler (3) umfasst.

4. Verfahren nach einem der vorherigen Ansprüche, wobei der Errichtungsschritt a) einen zusätzlichen Teilschritt umfasst, wobei ein erster Abschnitt des Unterbaus, bestehend aus mindestens einem Pfeiler (3), mindestens einem Träger (6) aus der ersten Vielzahl (4) von Trägern und mindestens einem Träger (6) aus der zweiten Vielzahl (5) von Trägern, an einem Lagerplatz (15) errichtet wird.

5. Verfahren nach einem der vorherigen Ansprüche, wobei in Schritt a) die Fahrzeuge (17) mit den Trägern (6) an dem ersten Ende des Unterbaus aufgestellt werden.

6. Verfahren nach einem der vorherigen Ansprüche, wobei die Träger (6) mit einem von dem Unterbau (2) an sich getragenen Trägerbewegungskran (18) positioniert werden.

7. Verfahren nach einem der vorherigen Ansprüche, wobei die Träger (6) der ersten Vielzahl (4) von Trägern nach dem Träger des ersten Transportwegs (7) angeordnet werden, der das zweite Ende des Unterbaus bildet, und die Träger (6) der zweiten Vielzahl (5) von Trägern nach dem Träger des ersten Transportwegs (7) angeordnet werden, der das zweite Ende des Unterbaus bildet.

8. Verfahren nach einem der vorherigen Ansprüche, wobei in Schritt b) die Fahrzeuge (17) mit den Rohrsegmenten (14) an dem ersten Ende des Unterbaus aufgestellt werden.

9. Verfahren nach einem der vorherigen Ansprüche, wobei in Schritt b) die Rohrsegmente (14) zunächst an dem zweiten Ende des Unterbaus positioniert werden und dann voreinander in Richtung des ersten Endes des Unterbaus positioniert werden.

## Revendications

1. Procédé pour ériger une partie (1) d'une structure de transport comprenant un premier ensemble (12) de segments tubulaires (14) et un second ensemble (13) de segments tubulaires (14), les deux ensembles pouvant être placés sous une faible pression d'air et à travers lesquels des nacelles peuvent se déplacer sensiblement sans friction d'air, le procédé comprenant les étapes consistant à :
- (a) ériger une sous-structure (2) comprenant une pluralité de piles (3), une première pluralité (4) de poutres (6) positionnées sur au moins certaines des piles et formant une première voie de transport (7) s'étendant à partir d'une première extrémité de la sous-structure à une seconde et une seconde pluralité (5) de poutres (6) positionnées sur au moins certaines des piles et formant une seconde voie de transport (10) s'étendant à partir de la première extrémité de la sous-structure à la seconde, le long de la première voie de transport, l'étape d'érection comprenant l'étape consistant à transporter, avec les véhicules (17), les poutres (6) des première et seconde pluralités le long de la première voie de transport (7) formée par les poutres de la première pluralité de poutres préalablement positionnées, positionner les poutres dans leur position d'utilisation de manière alternée à la seconde extrémité de la première voie de transport et à la seconde extrémité de la seconde voie de transport et faire revenir les véhicules à la première extrémité de la sous-structure le long de la seconde voie de transport (10) formée par les poutres de la seconde pluralité de poutres préalablement positionnées,
- (b) transporter, avec les véhicules (17), des segments tubulaires (14) le long d'une seule voie de transport sélectionnée parmi la première voie de transport (7) et la seconde voie de transport (10), dans la position d'utilisation de chaque segment tubulaire, positionner chaque segment tubulaire dans sa position d'utilisation de manière alternée sur la première pluralité de poutres et sur la seconde pluralité de poutres et faire revenir les véhicules le long de l'autre voie de transport parmi la première voie de transport (7) et la seconde voie de transport (10).

2. Procédé selon la revendication 1, dans lequel la sous-structure (2) ne comprend pas de plateforme formant une voie de service.

3. Procédé selon l'une quelconque des revendications précédentes, dans lequel l'étape d'érection a) comprend une première sous-étape consistant à ériger les piles (3).

4. Procédé selon l'une quelconque des revendications précédentes, dans lequel l'étape d'érection a) comprend une sous-étape supplémentaire, dans laquelle une première section de la sous-structure comprenant au moins une pile (3), au moins une poutre (6) de la première pluralité (4) de poutres et au moins une poutre (6) de la seconde pluralité (5) de poutres est érigée sur un site d'approvisionnement (15).

5. Procédé selon l'une quelconque des revendications précédentes, dans lequel, à l'étape a), les véhicules (17) est mis en place avec les poutres (6) à la première extrémité de la sous-structure.

6. Procédé selon l'une quelconque des revendications précédentes, dans lequel les poutres (6) sont positionnées avec une grue lance-poutre (18) supportée par la sous-structure (2) elle-même.

7. Procédé selon l'une quelconque des revendications précédentes, dans lequel les poutres (6) de la première pluralité (4) de poutres sont positionnées après la poutre de la première voie de transport (7) formant la seconde extrémité de la sous-structure et les poutres (6) de la seconde pluralité (5) de poutres sont positionnées après la poutre de la première voie de transport (7) formant la seconde extrémité de la sous-structure.

8. Procédé selon l'une quelconque des revendications précédentes, dans lequel, à l'étape b), les véhicules (17) sont mis en place avec les segments tubulaires (14) à la première extrémité de la sous-structure.

9. Procédé selon l'une quelconque des revendications précédentes, dans lequel, à l'étape b), les segments tubulaires (14) sont tout d'abord positionnés à la seconde extrémité de la sous-structure et ensuite positionnés l'un devant l'autre dans la direction de la première extrémité de la sous-structure.
